# EUROPÄISCHE PATENTSCHRIFT

(11) **EP 2 631 573 B1**
(45) Veröffentlichungstag und Bekanntmachung des Hinweises auf die Patenterteilung: **18.12.2019**
(21) Anmeldenummer: 13000652.1
(22) Anmeldetag: 08.02.2013
(51) Int. Cl.: F25D 17/06, H02K 5/128, H02K 7/14, F24C 15/32

(54) **Haushaltgerät, insbesondere Kühlschrank, mit einem Ventilator im Innenraum**
Household device, in particular a refrigerator, with a fan in the interior
Appareil ménager, en particulier réfrigérateur, avec un ventilateur dans l'espace intérieur

(30) Priorität: 22.02.2012 CH 231122012
(43) Veröffentlichungstag der Anmeldung: 28.08.2013
(73) Patentinhaber: V-Zug AG, 6300 Zug (CH)
(72) Erfinder: Werner, Jürg, CH-8908 Hedingen (CH)
(74) Vertreter: Mirza, Akram Karim

(56) Entgegenhaltungen:
- EP-A1- 1 178 213
- EP-A1- 2 056 048
- JP-A- H04 320 779
- JP-A- H08 303 928
- JP-A- 2004 232 879
- JP-A- 2004 278 994

## Beschreibung

### Gebiet der Erfindung

Die Erfindung betrifft ein Haushaltsgerät, insbesondere einen Kühlschrank, mit einem Nutzraum, einer den Nutzraum begrenzenden Nutzraumwand, mindestens einem im Nutzraum angeordneten Ventilator und mit einem Antrieb umfassend einen Stator und einen mit dem Ventilator gekoppelten Rotor, wobei der Rotor vom Stator elektromagnetisch zur Rotation angetrieben werden kann.

### Hintergrund

Um die Wirkung von Haushaltgeräten zu verbessern, wurde vorgeschlagen, in deren Innenraum einen Ventilator anzuordnen. Mit dieser Massnahme kann beispielsweise die Temperaturverteilung im Innenraum verbessert werden. Zum Antreiben des Ventilators ist ausserhalb des Nutzraums ein Elektromotor vorgesehen. Dieser besitzt in bekannter Weise einen Stator und einen Rotor, wobei der Rotor von einem vom Stator erzeugten Feld rotiert wird. In der Nutzraumwand ist eine Durchbrechung vorgesehen, um eine Antriebswelle zum Ventilator zu führen. Alternativ befindet sich der ganze Ventilator mit Rotor und Stator im Nutzraum, wobei für die Stromzufuhr eine Durchbrechung in der Nutzraumwand notwendig ist und der Ventilatorkörper fest mit der Nutzraumwand verbunden ist

Eine derartige Lösung, und insbesondere die Durchbrechung in der Nutzraumwand, wird jedoch als nachteilig empfunden, weil die Reinigung des Nutzraums erschwert wird und weil eine ausreichend dichte Durchführung im Bereich der Durchbrechung aufwändig ist.

In EP1178213 wird ein Behälter zum Aufheizen von darin eingebrachten Gegenständen beschrieben. Der Behälter ist mit einem Ventilator ausgestattet, um die Luft im Nutzraum zu bewegen. Der Ventilator weist einen Propeller innerhalb des Nutzraums und Mittel zur Erzeugung eines Magnetfeldes ausserhalb des Nutzraums auf. Der Propeller wird magnetisch durch den Boden der Kammer angetrieben, ohne dass der Boden eine Öffnung aufweist.

### Darstellung der Erfindung

Es stellt sich deshalb die Aufgabe, ein Haushaltsgerät der eingangs genannten Art bereitzustellen, das diese Nachteile mindestens teilweise vermeidet.

Diese Aufgabe wird vom Haushaltsgerät gemäss Anspruch 1 gelöst. Demgemäss ist der Stator ausserhalb des Nutzraums und der Rotor innerhalb des Nutzraums angeordnet. Mit einer solchen Anordnung kann der Ventilator durch die Nutzraumwand angetrieben werden, ohne dass eine Durchbrechung der Nutzraumwand erforderlich ist. Der Rotor ist innerhalb einer Kammer untergebracht, wobei die Kammer mindestens teilweise von einem aus dem Nutzraum entfernbaren Einsatz gebildet ist, und wobei der Ventilator am Einsatz angeordnet ist.

Bevorzugt kann die Kammer dabei so ausgestaltet sein, dass zumindest ein Teil der Kammer im Nutzraum beweglich gelagert ist.

Der Rotor kann einen oder mehrere ventilatorseitigen Permanentmagneten oder ferritische Eisenkern(e) aufweisen, der vom Feld des Stators angetrieben wird, d.h. der Antrieb kann als Synchronmotor ausgestaltet sein. Der Rotor kann jedoch auch eine Kurzschlusswicklung und/oder einen Metallkörper (z.B. Scheibe aus Aluminium) aufweisen, in welcher bzw. welchem mit dem Stator Ströme werden können, d.h. der Antrieb kann als Asynchronmotor ausgestaltet sein.

Der Stator kann mehrere Spulen umfassen, die von einer Spulenansteuerung mit Strom versorgt werden. Die Spulenansteuerung ist so ausgestaltet, dass sie die Spulen mit zueinander phasenverschobenen Strömen beaufschlagt, um so ein magnetisches Drehfeld zu erzeugen.

Denkbar ist auch, dass der "Stator" einen statorseitigen Magneten und einen mechanischen Antrieb aufweist. Mit dem Antrieb kann der statorseitige Magnet rotiert werden, um so ein magnetisches Drehfeld zum Antrieben Rotors zu erzeugen.

Beim erfindungsgemässen Haushaltsgerät handelt es sich vorzugsweise um einen Kühlschrank. Die Erfindung kann aber z.B. auch in einem Tiefkühler, einem Backofen, einem Mikrowellengerät oder einem Dampfgargerät eingesetzt werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch einen Kühlschrank,
Fig. 2 eine schematische Darstellung eines Stators und eines Rotors und
Fig. 3 eine alternative Ausführung eines Stators und eines Rotors.

### Wege zur Ausführung der Erfindung

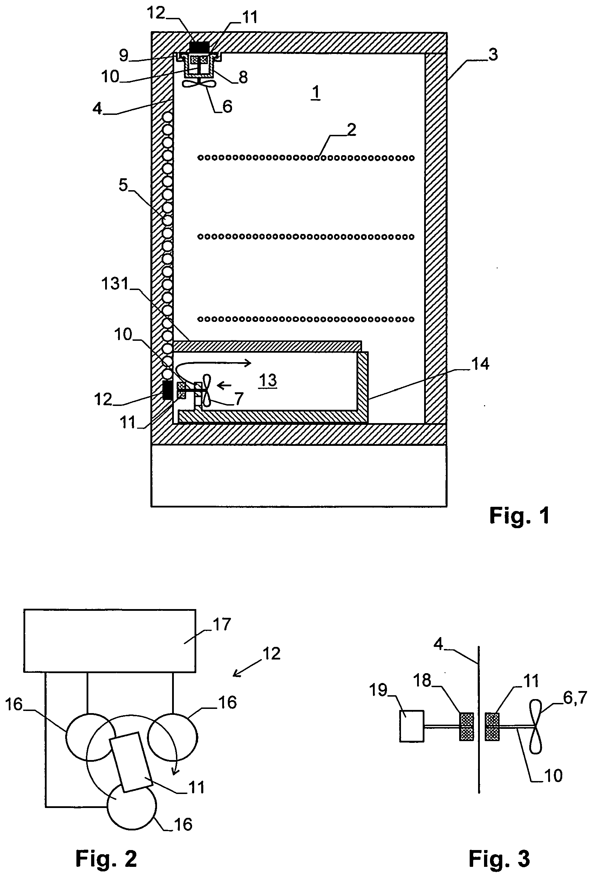

In Fig. 1 wird ein Ausführungsbeispiel der Erfindung anhand eines Kühlschranks beschrieben.

Der Kühlschrank besitzt einen Nutzraum 1, in welchem z.B. Gitter 2 zur Aufnahme des zu kühlenden Guts angeordnet sind. An der Vorderseite ist der Nutzraum 1 von einer Türe 3 verschlossen, auf den übrigen Seiten werden die Nutzraumwände 4 von isolierten Wandelementen gebildet. Im Bereich der der Türe 3 gegenüberliegenden Rückwand des Nutzraums 1 ist ein Kühlaggregat 5 angeordnet, mit welchem der Nutzraum 1 gekühlt wird.

Im vorliegenden Beispiel sind im Nutzraum zwei Ventilatoren 6, 7 angeordnet, wobei jedoch auch nur ein Ventilator oder mehr als zwei Ventilatoren vorgesehen sein können.

Ein erster Ventilator 6 ist beispielhaft im Bereich der Decke des Nutzraums 1 angeordnet und erzeugt einen der Rückwand entlang laufenden Luftstrom, um die Kälte vom Kühlaggregat 5 fortzuführen.

Der erste Ventilator 6 ist drehbar in einem Bügel 8 befestigt, der seinerseits in einer Halterung 9 an der Nutzraumwand gehalten wird, und zwar so, dass der Ventilator in einfacher Weise und ohne Werkzeug dem Nutzraum entnommen werden kann, um eine Reinigung des betreffenden Bereichs zu ermöglichen.

Der Ventilator 6 ist über eine Welle 10 mit einem Rotor 11 verbunden. Dieser befindet sich nahe der Nutzraumwand, z.B. weniger als 1 cm von der Nutzraumwand entfernt, aber noch innerhalb des Nutzraums 1. Auf der gegenüber liegenden Seite der Nutzraumwand ist ein Stator 12 vorgesehen, der ein magnetisches Drehfeld erzeugt, mit welchem der Rotor 9 in Drehung versetzt werden kann. Der Aufbau des Stators 12 und des Rotors 9 wird weiter unten genauer beschrieben. Die Welle 10 kann jedoch auch entfallen, wenn der Rotor 11 direkt mit dem Ventilator 6 verbunden wird.

Der zweite Ventilator 7 befindet sich in einer Kammer 13. Diese Kammer 13 ist entnehmbar im Nutzraum 1 angeordnet und vom Nutzraum über Kammerwände teilweise oder vollständig abgetrennt, so dass in der Kammer 13 ein vom Rest des Nutzraums unterschiedliches Klima aufrecht erhalten werden kann, z.B. mit unterschiedlicher Temperatur und/oder Luftfeuchtigkeit.

Der zweite Ventilator 7 dient dazu, die Luft in der Kammer 13 zu bewegen und auf diese Weise für ein homogeneres Klima (Temperatur, Feuchte) innerhalb der Kammer 13 zu sorgen.

Die Kammer 13 wird mindestens teilweise von einem aus dem Nutzraum 1 entfernbaren Einsatz 14 gebildet, an welchem der Ventilator 7 angeordnet ist. Auf diese Weise kann der Ventilator 7 zusammen mit dem Einsatz dem Gerät entnommen werden. Der Einsatz 14 kann z.B. ein optionales Zubehör des Geräts bilden. In einer bevorzugten Ausführung ist der Einsatz 14 eine Schublade, die im eingesetzten Zustand zusammen mit der Trennwand 131 eine vom Rest des Nutzraums 1 getrennte Kammer 13 bildet. Eine solche Kammer vermag eine eigene klimatische Zone zu bilden, in der im Vergleich zum Rest des Nutzraums unterschiedliche klimatische Bedingungen aufrecht erhalten werden können.

Auf derjenigen Seite, an welcher der Ventilator 7 angeordnet wird, ist der Einsatz 14 vorzugsweise mindestens teilweise offen ausgestaltet, so dass mit dem Ventilator 7 Luft durch diese Seite gefördert werden kann. Dies ist in Fig. 1 illustriert, wo der Ventilator 7 an der Rückseite des Einsatzes 14, d.h. der der Türe 3 abgewandten Seite, offen ist. Der Ventilator 7 ist so ausgestaltet, dass er einen (in Fig. 1 mit Pfeilen dargestellten) Luftstrom zu dieser Seite hin erzeugt, welcher so einem Teil der Rückwand des Nutzraums 1 entlang laufen und einen effizienten Wärmeaustausch mit derselben bewirken kann.

In der dargestellten Ausführung ist der Antrieb des zweiten Ventilators 7 gleich aufgebaut wie jener des ersten Ventilators 6, d.h. der Ventilator 7 ist über eine Welle 10 mit einem Rotor 11 verbunden, der von einem Stator 12 zur Drehung angetrieben wird.

In einer bevorzugten Ausführung besteht der Rotor 11 aus einem Körper, welcher mindestens einen Permanentmagneten (der in den Ansprüchen als "ventilatorseitiger Permanentmagnet" bezeichnet wird) und/oder mindestens einen ferritischen Eisenkern enthält. Ein solcher Permanentmagnet bzw. Eisenkern kann mit einem geeigneten, sich zeitlich ändernden magnetischen Feld (einem sogenannten Drehfeld) zur Rotation angetrieben werden.

Das Drehfeld wird vom Stator 12 erzeugt. In der Ausführung, die in Fig. 2 dargestellt ist, besteht der Stator 12 aus drei auf einer Kreislinie konzentrisch zur Welle 11 angeordneten Spulen 16, die von einer Spulenansteuerung 17 mit Strom versorgt werden. Die Spulenansteuerung 17 erzeugt in bekannter Weise drei zueinander phasenverschobene Wechselströme, die durch die Spulen geleitet werden.

Der Stator 12 kann jedoch auch in anderer Weise aufgebaut sein. Ein Beispiel ist in Fig. 3 illustriert, wo der Stator 12 von einem Magneten 18, der in den Ansprüchen als "statorseitiger Magnet" bezeichnet wird, und von einem Magnetantrieb 19 gebildet wird. Der Magnet 18 ist vorzugsweise ein Permanentmagnet mit einer Polrichtung senkrecht zur Welle 10. Er kann vom Magnetantrieb 19 um die Achse der Welle 10 gedreht werden und erzeugt so das oben erwähnte magnetische Drehfeld. Der Magnetantrieb 19 ist ein Elektromotor.

Wie die Ausführung nach Fig. 3 zeigt, ist im vorliegenden Kontext der Begriff "Stator" als dasjenige Bauteil zu verstehen, welches das Magnetfeld erzeugt, mit den der Rotor angetrieben wird. Aber der Begriff Stator impliziert nicht, dass alle Teile des Stators ruhend sind.

In den Ausführungen nach Fig. 1 - 3 ist der Rotor 11 als Permanentmagnet ausgestaltet. In einer alternativen Ausführung kann der Rotor 11 auch eine Kurzschlusswicklung sein, in welcher das Drehfeld des Stators einen Strom induziert, der seinerseits zu einem Magnetfeld führt, das mit dem Drehfeld wechselwirkt und den Rotor antreibt. In diesem Falle funktioniert der Antrieb in der Art eines Asynchron-Wechselstrommotors.

Die Nutzraumwand 4 zwischen dem Stator 12 und dem Rotor 11 sollte für das Drehfeld durchlässig sein. Zudem sollte sie zur Vermeidung von Wirbelströmen nicht leitfähig sein. Vorzugsweise besteht sie aus Kunststoff oder, z.B. für Anwendungen in einem Backofen, aus Keramik oder Glas.

Fig. 1 zeigt lediglich zwei mögliche Anordnungen des Ventilators 6 bzw. 7 im Nutzraum 1. Der Ventilator kann auch an anderen Orten des Nutzraums 1 angeordnet werden, z.B. an einer Seitenwand und/oder im Bereich der Türe 3.

Weiter kann, wie eingangs erwähnt, die vorliegende Erfindung auch bei anderen Geräten zum Einsatz kommen, beispielsweise:
- Das Haushaltsgerät kann ein Tiefkühler sein. In diesem Falle wird mit dem Ventilator z.B. ebenfalls ein Kühlelement angeblasen.
- Das Haushaltsgerät kann ein Backofen sein. In diesem Fall wird mit dem Ventilator z.B. ein Luftstrom entlang einem Heizelement erzeugt, um die Temperatur im Garraum zu homogenisieren.
- Das Haushaltsgerät kann ein Dampfgargerät sein. In diesem Fall kann mit dem Ventilator z.B. ein vom Dampferzeuger kommender Luftstrom im Garraum verteilt werden.

Die erfindungsgemässe Ausgestaltung erlaubt es, das Haushaltsgerät mit oder ohne Ventilator zu verkaufen, ohne das konstruktive Änderungen notwendig sind. Ein bestehendes Gerät kann, soweit es den Stator bereits enthält, durch einfache Installation des Rotors und Ventilators aufgerüstet werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Haushaltsgerät mit einem Nutzraum (1), einer den Nutzraum (1) begrenzenden Nutzraumwand, mindestens einem im Nutzraum (1) angeordneten Ventilator (6, 7) und mit einem Antrieb umfassend einen Stator (12) und einen mit dem Ventilator (6, 7) gekoppelten Rotor (11), wobei der Rotor (11) vom Stator (12) über ein Magnetfeld, insbesondere elektromagnetisch, zur Rotation antreibbar ist, und der Stator (12) ausserhalb des Nutzraums (1) und der Rotor (11) innerhalb des Nutzraums (1) angeordnet sind, wobei sich der Ventilator (7) in einer Kammer (13) befindet, welche im Nutzraum (1) angeordnet ist und vom Nutzraum (1) über Kammerwände (14, 131) teilweise oder vollständig abgetrennt ist, so dass in der Kammer (13) ein vom Rest des Nutzraums (1) unterschiedliches Klima aufrecht erhalten werden kann, insbesondere mit unterschiedlicher Temperatur und/oder Luftfeuchtigkeit, **dadurch gekennzeichnet, dass** die Kammer (13) mindestens teilweise von einem aus dem Nutzraum (1) entfernbaren Einsatz (14) gebildet ist, und wobei der Ventilator (7) an dem Einsatz (14) angeordnet ist, so dass der Ventilator (7) mit dem Einsatz (14) entnommen werden kann.

2. Haushaltsgerät nach Anspruch 1, wobei die Rotationsachse des Ventilators (7) im bestimmungsgemässen Betrieb des Haushaltsgerätes im Wesentlichen horizontal verläuft.

3. Haushaltsgerät nach einem der vorangehenden Ansprüche, wobei der Einsatz eine Schublade ist.

4. Haushaltsgerät nach einem der vorangehenden Ansprüche, wobei der Einsatz (14) an der Seite, an welcher der Ventilator (7) angeordnet ist, mindestens teilweise offen ist, derart, dass mit dem Ventilator (7) Luft durch die Seite förderbar ist.

5. Haushaltsgerät nach einem der vorangehenden Ansprüche, aufweisend einen zweiten, ausserhalb der Kammer (13) angeordneten Ventilator (6).

6. Haushaltsgerät nach einem der vorangehenden Ansprüche, wobei der Rotor (11) einen ventilatorseitigen Permanentmagneten und/oder einen ferritischen Eisenkern aufweist.

7. Haushaltsgerät nach einem der vorangehenden Ansprüche, wobei der Rotor (11) mindestens einen Metallkörper und/oder mindestens eine Kurzschlusswicklung aufweist, in welchem bzw. welcher mit dem Stator Störme induzierbar sind

8. Haushaltsgerät nach einem der vorangehenden Ansprüche, wobei der Stator (12) mehrere Spulen (16) und eine Spulenansteuerung (17) aufweist, wobei die Spulenansteuerung (17) dazu ausgestaltet ist, die Spulen (16) mit phasenverschobenen Strömen zu beaufschlagen.

9. Haushaltsgerät nach einem der Ansprüche 6 bis 8, wobei der Stator (12) einen statorseitigen Magneten (18) und einen Magnetantrieb (19) aufweist, wobei der statorseitige Magnet (18) vom Magnetantrieb (19) rotierbar ist.

10. Haushaltsgerät nach einem der vorangehenden Ansprüche, wobei im Nutzraum (1) eine Halterung angeordnet ist, zur entnehmbaren Aufnahme des zweiten Ventilators (6) und des Rotors (11).

11. Haushaltsgerät nach einem der vorangehenden Ansprüche, wobei das Haushaltsgerät ein Kühlschrank, ein Tiefkühler, ein Backofen oder ein Dampfgargerät ist.

## Claims

1. Household appliance having a useable space (1), a useable space wall limiting the useable space (1), at least one fan (6, 7) arranged in the useable space (1) and having a power unit comprising a stator (12) and a rotor (11) connected to the fan (6, 7), wherein the rotor (11) is drivable to the rotation by the stator (12) via a magnetic field, in particular electromagnetically, and the stator (12) is arranged outside the useable space (1) and the rotor (11) is arranged inside the useable space (1),
wherein the fan (7) is located within a chamber (13) which is arranged in the useable space (1) and is partially or completely separated from the useable space (1) via chamber walls (14, 131), such that in the chamber (13) a climate different from the rest of the useable space (1) can be maintained, in particular with a different temperature and/or air humidity,
**characterized in that** the chamber (13) is at least partially formed by an insert (14) removable from the useable space (1), and wherein the fan (7) is arranged at the insert (14) such that the fan (7) can be removed with the insert (14).

2. Household appliance according to claim 1, wherein the rotation axis of the fan (7) runs essentially horizontally in the intended operation of the domestic appliance.

3. Household appliance according to one of the preceding claims, the insert is a drawer.

4. Household appliance according to one of the preceding claims, wherein the insert (14) is at least partially open on the side on which the fan (7) is arranged, such that air can be conveyed by the fan (7) through the side.

5. Household appliance according to one of the preceding claims, having a second fan (6) arranged outside the chamber (13).

6. Household appliance according to one of the preceding claims, wherein the rotor (11) comprises a permanent magnet on the side of the fan and/or a ferritic iron core.

7. Household appliance according to one of the preceding claims, wherein the rotor (11) comprises at least one metal body and/or at least one short-circuit winding in which currents can be induced by the stator.

8. Household appliance according to one of the preceding claims, wherein the stator (12) comprises a plurality of coils (16) and a coil drive (17), wherein the coil drive (17) is designed to impinge the coils (16) with phase-shifted currents.

9. Household appliance according to any of the claims 6 to 8, wherein the stator (12) comprises a stator-side magnet (18) and a magnet drive (19), wherein the stator-side magnet (18) is rotatable by the magnet drive (19).

10. Household appliance according to one of the preceding claims, wherein a holding device is arranged in the useable space (1) for removably receiving the second fan (6) and the rotor (11).

11. Household appliance according to one of the preceding claims, wherein the household appliance is a refrigerator, a freezer, a baking oven or a steam cooking appliance.

## Revendications

1. Appareil ménager avec un espace utile (1), une paroi d'espace utile délimitant l'espace utile (1), au moins un ventilateur (6, 7) agencé dans l'espace utile (1) et avec un entraînement comprenant un stator (12) et un rotor (11) couplé au ventilateur (6, 7), dans lequel le rotor (11) peut être entraîné en rotation par le stator (12) par le biais d'un champ magnétique, en particulier par voie électromagnétique, et le stator (12) est agencé en dehors de l'espace utile (1) et le rotor (11) est agencé à l'intérieur de l'espace utile (1),
dans lequel le ventilateur (7) se trouve dans une chambre (13) qui est agencée dans l'espace utile (1) et est séparée partiellement ou entièrement de l'espace utile (1) par le biais de parois de chambre (14, 131) de sorte qu'un climat différent du reste de l'espace utile (1) puisse être maintenu dans la chambre (13), en particulier avec une température et/ou humidité de l'air différente,
**caractérisé en ce que** la chambre (13) est formée au moins partiellement par un insert (14) retirable de l'espace utile (1), et dans lequel le ventilateur (7) est agencé au niveau de l'insert (14) de sorte que le ventilateur (7) puisse être retiré avec l'insert (14).

2. Appareil ménager selon la revendication 1, dans lequel l'axe de rotation du ventilateur (7) s'étend sensiblement horizontalement dans le fonctionnement selon les dispositions de l'appareil ménager.

3. Appareil ménager selon l'une des revendications précédentes, dans lequel l'insert est un tiroir.

4. Appareil ménager selon l'une des revendications précédentes, dans lequel l'insert (14) est ouvert au moins partiellement au niveau du côté au niveau duquel le ventilateur (7) est agencé, de telle manière que de l'air puisse être transporté à travers le côté avec le ventilateur (7).

5. Appareil ménager selon l'une des revendications précédentes, présentant un second ventilateur (6) agencé en dehors de la chambre (13).

6. Appareil ménager selon l'une des revendications précédentes, dans lequel le rotor (11) présente un aimant permanent côté ventilateur et/ou un noyau de fer ferritique.

7. Appareil ménager selon l'une des revendications précédentes, dans lequel le rotor (11) présente au moins un corps métallique et/ou au moins un enroulement en court-circuit, dans lequel des courants peuvent être induits avec le stator.

8. Appareil ménager selon l'une des revendications précédentes, dans lequel le stator (12) présente plusieurs bobines (16) et une commande de bobine (17), dans lequel la commande de bobine (17) est configurée afin de solliciter les bobines (16) en courants déphasés.

9. Appareil ménager selon l'une des revendications 6 à 8, dans lequel le stator (12) présente un aimant (18) côté stator et un entraînement magnétique (19), dans lequel l'aimant (18) côté stator peut être tourné par l'entraînement magnétique (19).

10. Appareil ménager selon l'une des revendications précédentes, dans lequel un support est agencé dans l'espace utile (1), pour la réception amovible du second ventilateur (6) et du rotor (11).

11. Appareil ménager selon l'une des revendications précédentes, dans lequel l'appareil ménager est un réfrigérateur, un congélateur, un four ou un appareil de cuisson à vapeur.
